# EUROPEAN PATENT APPLICATION

(11) **EP 4 752 009 A1**
(43) Date of publication of application: **03.06.2026**
(21) Application number: 24216665.0
(22) Date of filing: 29.11.2024
(51) Int. Cl.: B60S 1/04, B60S 1/34

(54) **ARM HEAD FOR A VEHICLE WIPER SYSTEM**

(71) Applicant: Valeo Systèmes d'Essuyage, 78322 Le Mesnil Saint Denis (FR)
(72) Inventor: SWIETEK, Wiktor, 32 050 Skawina (PL); SPIECHA, Antoni, 32 050 Skawina (PL)
(74) Representative: Valeo Visibility

(57) **Abstract**

The present invention relates to an arm head 103 for a wiper system 10. The arm head 103 may be attached to one end of a wiper arm 101. The arm head 103 includes a central hub portion 303 having a hole 301 to receive at least a portion of the pivot shaft 105 and a sidewall 203 provided around the central hub portion 303. One or more connection members 304 are formed between the central hub portion 303 and the sidewall 203. When an impact force more than a predefined force is applied on the arm head 103, the connection members 304 break and the sidewall 203 of the arm head 103 disengages from the central hub portion 303 to slide over the pivot shaft 105, thereby absorbing the impact energy. The collapsible connection assembly 200 reduces injury to a pedestrian in case of collision.

## Description

### TECHNICAL FIELD OF THE INVENTION

The present invention relates to a windshield wiper system for a vehicle, and more particularly to a collapsible arm head for a vehicle wiper system, for pedestrian collision safety.

### BACKGROUND OF THE INVENTION

The wiper system traditionally consists of one or more wiper assemblies driven by a wiper motor. The wiper assembly may include a wiper arm, one end of which is connected to an output shaft of the wiper motor through linkages and a wiper blade is attached to another end of the wiper arm. The wiper motor drives the wiper arm to swing between the predefined angular positions to wipe out the water and/or dirt present on the windshield. The wiper arm may include an arm head attached to a rotatable pivot shaft, which is driven by the wiper motor through linkages such as a drive lever. The pivot shaft may be rotatably supported by a pivot housing fixedly mounted on the vehicle.

When assembled on the vehicle, a top portion of the pivot shaft and/or the arm head of the wiper arm, may protrude above the exterior surface of the vehicle, in particular the hood/bonnet. In the event of a collision with a pedestrian, there is a likelihood of said pedestrian being thrown onto the hood and/or windshield of the vehicle. In this scenario, the head and/or torso of the pedestrian may hit the protruding portions of the wiper system. As the pivot shaft, apart from being rotatable in the pivot housing, is fixed with the vehicle structure, the pedestrian may incur severe injury during collision.

The prior art and the conventional wiper system have various disadvantages as described above, and there is a need for a wiper assembly for a vehicle wiper system, that can overcome, or at least mitigate, the disadvantages of the conventional wiper system.

### SUMMARY OF THE INVENTION

An object of the invention is to solve the disadvantages described above of known wiper system. In particular, an object of the present invention to provide a windshield wiper system having pedestrian safety features.

Another object of the present invention is to provide a collapsible arm head assembly to minimize injury to the pedestrian, during collision.

Yet another object of the present invention is to provide an energy absorbing arm head connection between a wiper arm and a pivot shaft of a wiper assembly, to absorb impact forces exerted on the wiper assembly.

In this context, the present invention is directed towards an arm head for connecting a wiper arm to a pivot shaft of a pivot assembly. The arm head may include a first end portion adapted to be secured to the pivot shaft and a second end portion adapted to be attached to the wiper arm. The second end portion of the arm head may be attached to the wiper arm by any known means. The first end portion may include a central hub portion having a hole with a central axis X. It is to be noted that the central axis of the hole may coincide with a pivot axis X of the pivot assembly, and hence may be denoted by the reference sign 'X'. The said hole may be adapted to receive at least a portion of the pivot shaft. The first end portion may further include a sidewall disposed around the central hub portion. At least one connection member may be formed between the central hub portion and the sidewall. The connection member may be integrally formed with the central hub portion and/or the arm head side wall. The at least one connection member may be adapted to break under an impact force on the arm head exceeding a predefined force. The connection member(s) may form a rigid connection between the central hub portion and the arm head side wall to allow desired functioning of the pivot assembly.

Advantageously, the connection member(s) may be formed as a weaker element that are adapted to break under a predetermined force such that when the impact force on the arm head, more specifically, on the arm head side wall exceed the predetermined force, the connection member(s) may break by absorbing the impact energy. Once the connection member(s) break, the arm head side wall may move relative to the central hub portion.

In a non-limiting embodiment of the present invention, a plurality of the connection members may be formed between the central hub portion and the sidewall. The number and location(s) of connection members may be predetermined based on structural requirements of the arm head and a desired impact force needed to break them. The plurality of the connection members may be provided in the same plane or different parallel planes. The planes may be orthogonal to the central axis or the pivot axis X.

In a non-limiting embodiment of the present invention, at least two connection members may be arranged in different planes. The said planes may be substantially orthogonal to the central axis X and spaced apart along the central axis X of the hole. The said planes may be parallel to one another. Preferably, the planes may be spaced along the central axis X or the pivot axis X, between an upper surface and a lower surface of the central hub portion.

In a non-limiting embodiment of the present invention, at least one of the planes comprises three connection members uniformly distributed around the circumference of the central hub portion. Preferably, a first plane near the upper surface of the central hub portion and/or a second plane near the lower surface of the central hub portion and/or a third plane intermediate between the first surface and the second surface of the central hub portion, may include three connection members uniformly distributed along circumference of the central hub portion.

In a non-limiting embodiment of the present invention, at least one connection member may be arranged in a respective one of the said planes with an angular offset about the central axis (X) with respect to at least one connection member arranged in another, respective plane. In other words, the connection member in one plane has an angular offset about the central axis X, with the connection member(s) of another plane(s). This misalignment of the connection members of different planes may ensure proper breaking of all the connection members when impact force on the arm head exceeds a predefined force.

In a non-limiting embodiment of the present invention, the angular offset is at least 60 degrees. Preferably, the connection member arranged in one plane may be angularly offset by at least 60 degrees from the connection member arranged in the adjacent plane.

In a non-limiting embodiment of the present invention, at least one of the connection members has a generally circular, rectangular, oval, or square cross section. Preferably, all the connection members may have the same or different cross sections. The cross section of the connection may be predetermined based on the desired impact force needed to break the connection members.

In a non-limiting embodiment of the present invention, at least one of the connection members extends in a corresponding plane about the central axis (X) between 2 degrees to 360 degrees. Preferably, at least one connection member may be formed in one of the planes that may extend between 2 degrees to 360 degrees in the said plane.

Advantageously, a single connection member may be provided in the respective plane that may be continuously formed along the circumference of the central hub portion. Alternatively, at least one connection member may be formed such that at least one recess is formed between the central hub portion and the arm head side wall.

In a non-limiting embodiment of the present invention, the sidewall may include a top end axially offset with respect to the central hub portion along the central axis X, by a predefined distance. Preferably, the top end of the arm head side wall may be raised considerably above the central hub portion to receive impact force in case of collision with pedestrian. Alternatively, the top end of the arm head side wall may be at the level of the upper surface of the central hub portion or raised above the central hub portion by a small distance, to achieve flat head configuration that may be desired for certain wiper systems.

The present invention also relates to a connection assembly for a wiper system. The connection assembly may comprise the arm head as disclosed above and a pivot assembly including a pivot shaft rotatably supported in a pivot housing. The pivot housing may have a through bore along the pivot axis X and at least some portion of the pivot shaft may be inserted in the through bore and supported therein by bushings and/or bearings etc. At least a portion of the pivot shaft may be received in the hole of the central hub portion, and secured to the arm head by a securing means. A portion of the pivot shaft near a top portion may be received in the hole of the central hub portion. The said portion of the pivot shaft may include a conical knurling that may be adapted to cooperate with the complementing portion of the hole to achieve a torque-transmitting joint between the arm head and the pivot shaft. Further, the cooperation between the conical knurling and the hole of the central hub portion may limit the translational movement of the arm head with respect to the pivot shaft, along the pivot axis in downward direction. Moreover, the securing means may restrict the translational movement of the arm head with respect to the pivot shaft, along the pivot axis in upward direction.

In a non-limiting embodiment of the present invention, the securing means may include a nut threadedly engaged with a top portion of the pivot shaft. Advantageously, the nut may be fastened to the top portion of the pivot shaft from above the central hub portion. It is to be understood that additional, complementary components such as a washer etc. may be provided with the nut.

Alternatively, the securing means may include a screw threadedly engaged in a corresponding blind hole provided in the top portion of the pivot shaft. The blind hole may be formed in the pivot shaft at the top portion and may have internal threads. Advantageously, the screw may be fastened in the blind hole of the pivot shaft from above the central hub portion. It is to be understood that additional, complementaty components such as a washer etc. may be provided with the screw.

The present invention also relates to a wiper assembly for a wiper system, including a wiper blade attached to a first end of a wiper arm and the connection assembly as disclosed above. The second end portion of the arm head may be secured to a second end of the wiper arm. The wiper assembly may include other, complementary components, which may be required for proper functioning of the wiper assembly.

The present invention also relates to a wiper system for a motor vehicle,invluding at least one wiper assembly according to the embodiment described embodiment,and at least one wiper motor configured to rotate the pivot shaft of the connection assembly through linkages, to operate the at least one wiper assembly. The wiper system may be provided for cleaning a vehicle windshield or window etc. In a possible variant, the wiper system may include two wiper assemblies driven by the wiper motor through suitable linkages, to wipe out the water and dirt present on the windshield.

### BRIEF DESCRIPTION OF DRAWINGS

The present invention is expounded in detail below with the aid of the presented drawings. Items shown in the drawings are not to scale and are simplified to increase clarity of disclosure. In the drawings:
Figure 1 illustrates a schematic perspective view of a wiper system for a motor vehicle, according to the present invention;
Figure 2 illustrates a schematic perspective view of a wiper assembly for the wiper system, according to the present invention;
Figure 3A illustrates a schematic perspective view of a connection assembly for the wiper assembly, according to preferred firstembodiment of the present invention;
Figure 3B illustrates a sectional view of the connection assembly for the wiper assembly, according to the embodiment of Figure 3A;
Figure 4 illustrates a schematic perspective view of an arm head for connection assembly, according to the embodiment of Figure 3A;
Figure 5A illustrates a schematic top view of the arm head for the connection assembly, according to the embodiment of Figure 3A;
Figure 5B illustrates a sectional view taken along a longitudinal axis A-A' of the arm head, according to the embodiment of Figure 3A;
Figure 5C illustrates a schematic top view of the arm head for the connection assembly, according to the embodiment of Figure 3A;
Figure 5D illustrates a sectional view taken along a longitudinal axis A-A' of the arm head, according to the embodiment of Figure 3A;
Figure 6A exploded view of the arm head assembly, according to the embodiment of Figure 3A;
Figure 6B illustrates a sectional view of the arm head assembly, according to the embodiment of Figure 3A;
Figure 7A illustrates an exploded view of the arm head assembly, according to a second embodiment of the present invention;
Figure 7B illustrates a sectional view of the arm head assembly, according to the embodiment of Figure 7A;
Figure 8 illustrates a schematic perspective view of the connection assembly, according to the embodiment of Figure 7A;
Figure 9A illustrates a schematic top view of the arm head for the connection assembly, according to the embodiment of Figure 7A;
Figure 9B illustrates a sectional view of the arm head, according to the embodiment of Figure 7A;
Figure 10A illustrates an exploded view of an arm head assembly, according to the embodiment of Figure 7A;
Figure 10B illustrates a sectional view of the arm head assembly, according to the embodiment of Figure 7A; and
Figure 11 illustrates an exploded view of an arm head assembly, according to the embodiment of Figure 7A.

### DETAILED DESCRIPTION OF INVENTION

The characteristics, variants and different modes of realization of the invention may be associated with each other in various combinations, insofar as they are not incompatible or exclusive with each other. In particular, variants of the invention comprising only a selection of features subsequently described in from the other features described may be imagined, if this selection of features is enough to confer a technical advantage and/or to differentiate the invention from prior art.

The following embodiments are examples. Although the description refers to one or more embodiments, this does not necessarily mean that each reference is to the same embodiment, or that the features apply only to one embodiment. Simple features of different embodiments may also be combined and/or interchanged to provide further embodiments.

In the present description, certain elements or parameters may be indexed, for example first element or second element as well as first parameter and second parameter or first criterion and second criterion, etc. In this case, it is a simple indexing operation to differentiate and name elements or parameters or criteria which are close, but not identical. In this case, simple indexing is used to differentiate and name elements or parameters or criteria which are close, but not identical. This indexing does not imply that one element, parameter or criterion has priority over another, and such names can easily be interchanged without going beyond the scope of this description. Nor does this indexing imply an order in time, for example to assess a particular criterion.

In addition, the designations 'lower' and 'upper' with respect to the elements of the pivot assembly are understood with respect to the orientation of the pivot assembly and pivot axis X when the wiper assembly is mounted on the vehicle, a lower end/side of such elements corresponding to the end/side disposed towards road/ground, while an upper end/side corresponds to the end/side disposed away from the road/ground. Further, the terminologies 'upward' and 'downward' are also understood with respect to the orientation of the pivot assembly and pivot axis X when the wiper assembly is mounted on the vehicle.

It is to be understood that as a large number of the components in a vehicle wiper system are conventional, such are not shown in detail in order that the features of the present invention may be more clearly identified.

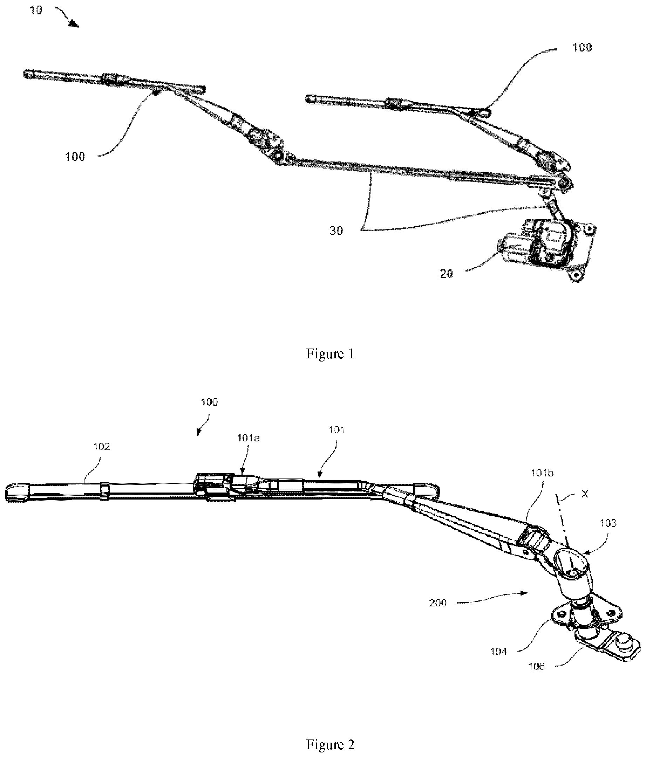

Figure 1 illustrates a wiper system 10 for a motor vehicle. The wiper system 10 may include a pair of wiper assemblies 100. The pair of wiper assemblies 100 are provided for cleaning a windshield (not shown) of the vehicle. The wiper assemblies may be driven by a wiper motor 20 via suitable linkage(s) 30, to clean the water and/or dirt present on the windshield.

As shown in Figure 2, the wiper assembly 100 may include a wiper arm 101 having a first end 101a and a second end 101b. The first end 101a of the wiper arm 101 may be attached to a wiper blade 102. The wiper blade 102 may include at least one wiper strip (rubber) intended to be in contact with the surface of the windshield to be cleaned. The wiper blade 102 may be secured to the first end 101a of the wiper arm 101 by a suitable attaching means such as but not limited to a connector and/or an adapter etc. The second end (101b) of the wiper arm 101 may be connected to an arm head 103 of a connection assembly 200 such that the wiper arm 101 may swing about a pivot axis X of the connection assembly 200.

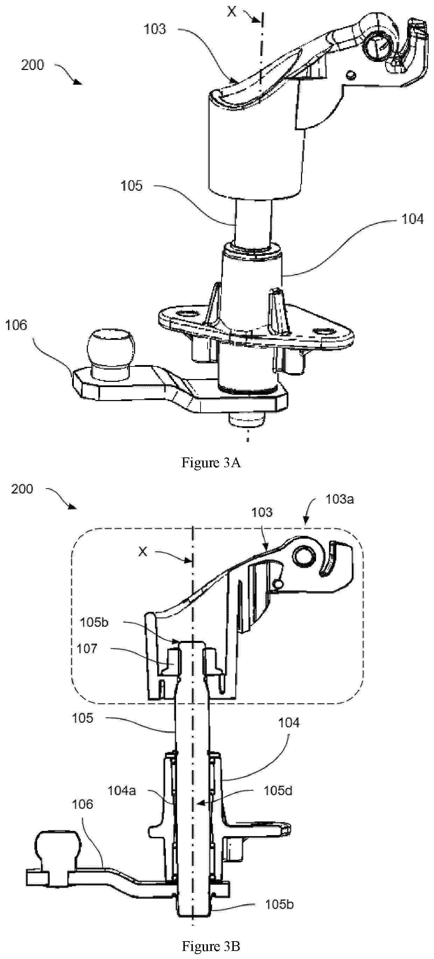

Figures 3A and 3B illustrate the connection assembly 200 according to a first embodiment of the present invention. The connection assembly 200 that may include the arm head 103 adapted to be connected to the second end 101b of the wiper arm 101 such that the wiper arm 101 may be rotated between predefined angular positions about the axis X.

The connection assembly 200 may further include a pivot shaft 105 rotatably supported in a pivot housing 104. The pivot housing 104 may include a through bore 104a such that it receives pivot shaft 105 and may allow rotation about the pivot axis X. Preferably, the through bore 104a may have a circular cross-section. The pivot shaft 105 may have a top portion 105b, a bottom portion 105c opposite to the top portion 105b, and a cylindrical main body 105d extending between the top portion 105b and bottom portion 105c. Preferably, the pivot shaft 105 may be provided in the form of a tubular member that can be solid or hollow. The pivot shaft 105 may be installed in the through bore 104a of the pivot housing 104 such that at least a portion of the main body 105d of the pivot shaft 105 towards the top portion 105b, extends outside of the through bore 104a of the pivot housing 104. Further, at least a portion of the pivot shaft 105 near bottom portion 105c, may extend outside of the through bore 104a of the pivot housing 104. A predefined clearance may be provided between the pivot shaft 105 and the through bore 104a of the pivot housing 104. Also, one or more bushings may be disposed between the pivot shaft 105 and the through bore 104a of the pivot housing 104. A drive lever 106 may be secured to the pivot shaft 105 near the bottom portion 105c of the pivot shaft 105, such that the drive lever 106 may be driven by the wiper motor 20 to rotate the pivot shaft 105 in the through bore 104a of the pivot housing 104 about the pivot axis. The drive lever 106 may be longitudinally and rotatably fixed to the pivot shaft 105 by a press-fit joint and a clip. It is to be understood that any other known securing means may be used to secure the drive lever 106 to the pivot shaft 105. The arm head 103 may be secured to the pivot shaft 105 near the top portion 105b. The arm head 103 may be secured to the pivot shaft 105, more specifically to the exposed portion of the pivot shaft 105 near the top portion 105b, such that rotation of the arm head 103 is restricted with respect to the pivot shaft 105. Further, a securing means 107 may be provided on the pivot shaft 105 of the pivot housing 104. The securing means 107 may restrict the movement of the arm head 103 with respect to the pivot shaft 105, in upward direction along the pivot axis X i.e. along the longitudinal axis of the pivot shaft 105.

It is to be noted that the longitudinal axis of the pivot shaft 105 coincides with the pivot axis X of the connection assembly 200, hence these terminologies may be interchangeably used and denoted by reference X. Further, the pivot housing 104 may be fixedly mounted on vehicle structure/component in a known manner.

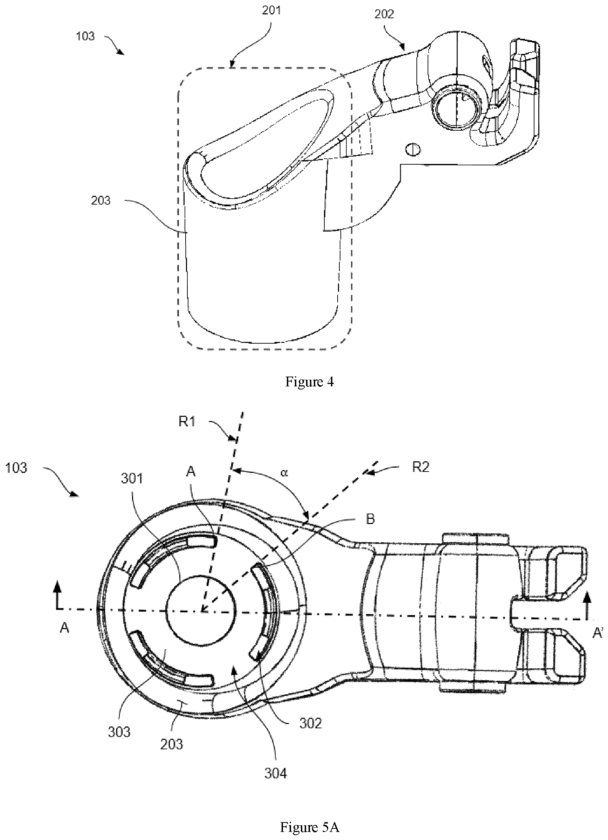

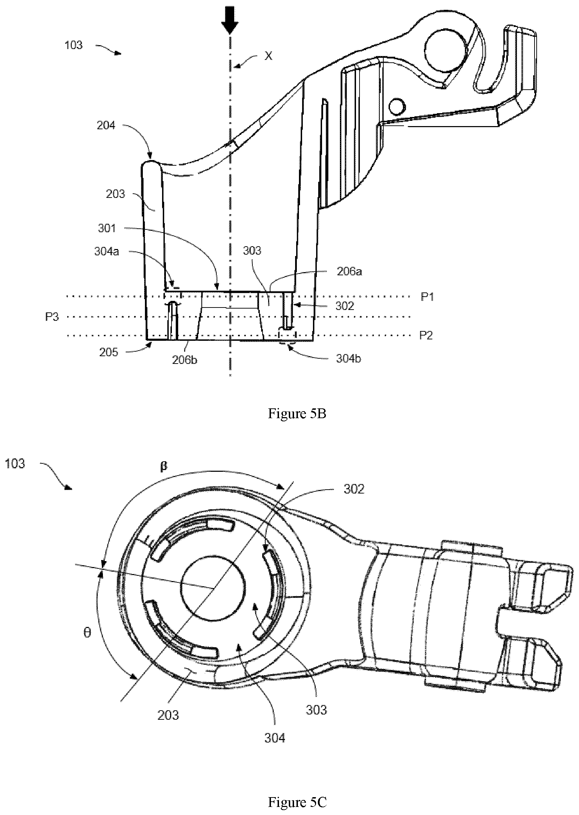

Figures 4, 5A, 5B, and 5C illustrate the arm head 103 of the connection assembly 200 for the wiper assembly 100, according to the first embodiment of the present invention. As shown in Figure 4, the arm head 103 may include a first end portion 201 that is adapted to be attached to of the pivot shaft 105. The arm head 103 may include a second end portion 202 to be attached to the second end 101b of the wiper arm 101 by any known means. Figure 5B illustrates a sectional view of the arm head 103 taken along the axis A-A' clearly visible in the Figure. As shown in Figures 5A and 5B, the arm head 103 may include a sidewall 203 disposed around a central hub 303. The central hub 303 may include a hole 301 formed in the middle of the central hub 303 to receive at least a portion of the pivot shaft 105. Preferably, the central hub 303 may have a substantially cylindrical shape. The hole 301 may have a varying cross sectional area, complementing a portion of pivot shaft 105 near to top portion 105b, to receive the corresponding portion of the pivot shaft 105 and restrict the movement of pivot shaft 105 along the pivot axis X.

Preferably, the pivot shaft may include a conical knurled portion 105e formed at a predefined position near the top portion 105b. The hole 301 may have a shape complementary to the conical shape of the pivot shaft 105, such that the conical knurled portion of the pivot shaft 105 may cooperate with the hole 301 to form a torque transmitting joint. Further, the cooperation between the conical knurled portion of the pivot shaft 105 and the hole 301 of the central hub 303 may restrict the movement of the arm head 103 with respect to the pivot shaft 105, along the pivot axis X in downward direction i.e. the movement of the arm head 103 towards the pivot housing 104 (refer Figure 3).

In the first embodiment of the present invention, the sidewall 203 of the arm head 103 may include an upper end 204 distanced apart from the central hub 303 along the pivot axis X. The sidewall 203 may include a lower end 205 formed in the opposite end of the upper end 204 of the sidewall 203, along the pivot axis X. In a variant embodiment, the upper end 204 of the sidewall 203 may be located at a predefined distance from the lower end 205, along the pivot axis X. Further, the said predefined distance may be at least 20 millimeters, along the pivot axis X. In another, variant embodiment, the said predefined distance may be less than 20 millimeter or greater than 20 millimeter. The sidewall 203 may be concentric with the pivot axis X, throughout its length between the upper end 204 and the lower end 205. Further, the sidewall 203 may have a predefined taper with respect to pivot axis X, at least partially along its length between the upper end 204 and the lower end 205.

Figures 5B and 5C illustrate the arm head 103 according to the preferred embodiment of the present invention. The arm head 103 may include at least one connection member 304 connecting the central hub 303 with the sidewall 203 as shown in Figure 5C.

In the first embodiment of the present invention, the at least one connection member 304a may be disposed around the circumference of the central hub 303 in a first plane P1 near to the upper surface 206a of the central hub 303 as shown in Figure 5A. In a variant embodiment, the at least one connection member 304b may be disposed in a second plane P2 near to the lower surface 206b of the central hub 303. In yet another variant embodiment of the present invention, the at least one connection member 304c may be provided in a third plane P3 that may be intermediately located between the first plane P1 and the second plane P2, along the pivot axis X. The third plane P3 may be equally distanced from the upper surface 206a and the lower surface 206b of the central hub 303, along the pivot axis X.

It is to be noted that the first plane P1, the second plane P2, and the third plane P3 may be substantially orthogonal to the pivot axis X. Further, it is to be understood that Figure 5B shows only an exemplary embodiment in which the connection members 304 in the first plane P1 and the second plane P2. However, the arm head 103 having connection member(s) 304 in any one or any two or all three planes may be envisioned accordingly. Moreover, more than three planes may be provided including at least one connection member 304 therein.

In the first embodiment of the present invention, at least one connection member 304 may be provided in the first plane P1 near the upper surface 206a of the central hub 303 and at least one another connection member 304 may be provided in the second plane P2 near the lower surface 206b of the central hub 303, as shown in Figure 5B. In one alternative, at least one connection member 304 may be provided in the first plane P1 near the upper surface 206a of the central hub 303 and at least one another connection member 304 may be provided in the third plane P3 intermediate to the upper surface 206a and the lower surface 206b of the central hub 303. In another alternative, at least one connection member 304 may be provided in the second plane P2 near the lower surface 206b of the central hub 303 and at least one another connection member 304 may be provided in the third plane P3 intermediate to the upper surface 206a and the lower surface 206b of the central hub 303. In still another alternative, at least one connection member 304 may be provided in the first plane P1 near the upper surface 206a of the central hub 303, at least one another connection member 304 may be provided in the second plane P2 near the lower surface 206b of the central hub 303, and at least one another connection member 304 may be provided in the third plane P3 intermediate to the upper surface 206a and the lower surface 206b of the central hub 303.

It is to be understood that the number of connection members 304 provided in the first plane P1 and/or the second plane P2 and/or the third plane P3 may be decided based on structural requirements of the arm head 103 and the desired impact force needed to break the connection member(s) to collapse the arm head 103 over the pivot shaft 105.

In the first embodiment of the present invention, three connection members 304 may be formed between the central hub 303 and the sidewall 203. The three connection members 304a may be disposed in the first plane P1 near the upper surface 206a of the central hub 303, as shown in Figure 5B. It is to be noted that the connection members 304 may be uniformly distributed around the central hub 303 in the same plane P1. In another embodiment, three connection members 304b may be disposed in the second plane P2 near to the lower surface 206b of the central hub 303. In yet another embodiment, three connection members 304 may be disposed in the third plane P3 that may be intermediately positioned between the upper surface 206a and lower surface 206b of the central hub 303.

In a preferred embodiment of the present invention, the connection member 304 disposed in a corresponding plane may have at least two edges, an edge A and an edge B as shown in Figure 5A. The edge A may be disposed in a first radial plane R1 and the edge B may be disposed in a second radial plane R2. The said radial planes R1 and R2 may be substantially orthogonal to the upper surface 206a and/or the lower surface 206b of the central hub 303 and may pass through the pivot axis X.

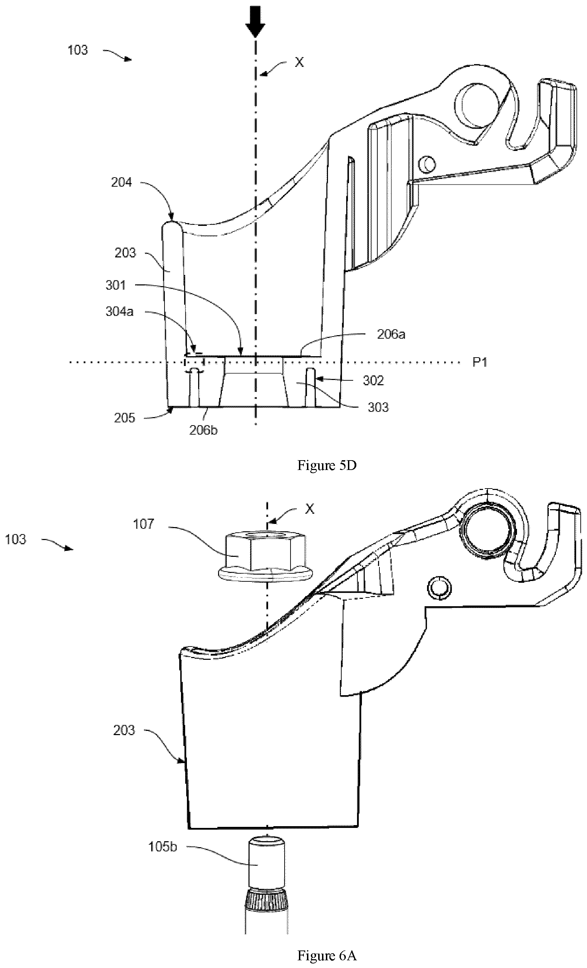

Preferably, the first radial plane R1 having the edge A of the connection member 304 may make an angle α with the second radial plane R2 having the edge B of the connection member 304. The said angle α may be in a range between 2 degrees and 360 degrees; an angle α approaching the latter limit being most appropriate in cases where only one connection member 304 is formed in the respective plane as shown in Figure 5D.

It is to be noted that in the case of having a plurality of the connection members 304 in the same plane, said angle α for each connection member 304 may be defined such that connection members 304 are uniformly distributed around the circumference of the central hub 303.-Preferably, as shown in Figure 5C, at least two connection members 304 may be located around central hub 303, in a respective plane, making at least an angle β with each other. The said angle β may be at least 120 degrees.

In an embodiment, where the connection members 304 are provided in two different planes, e.g. plane P1 and plane P2, at least one connection member 304a located in the first plane P1 near to the upper surface 206a of the central hub 303 may have an angular offset of θ with at one another connection member 304b located in the second plane P2 near to the lower surface 206b of the central hub 303. The said offset angle θ is preferably, but not necessarily, at least 60 degrees. This angular offset between the connection members 304a of the plane P1 with the connection member 304b of the plane P2 ensures the easy demolding of the arm head 103 during the manufacturing of the arm head 103. Further, the said angular offset may provide clean disengagement between central hub 303 and sidewall 203 under the predefined impact force.

The connection member 304 may have a thickness along the pivot axis X. The said thickness of the connection member 304 may be at least 2 millimeters. Further, the connection member 304 may have a substantially circular, rectangular, square or oval cross section. It is to be understood that the thickness and/or cross-section of the connection member(s) may be determined based on *inter alia* the structural requirements of the arm head 103 and based on the desired impact force needed to break the connection members 304.

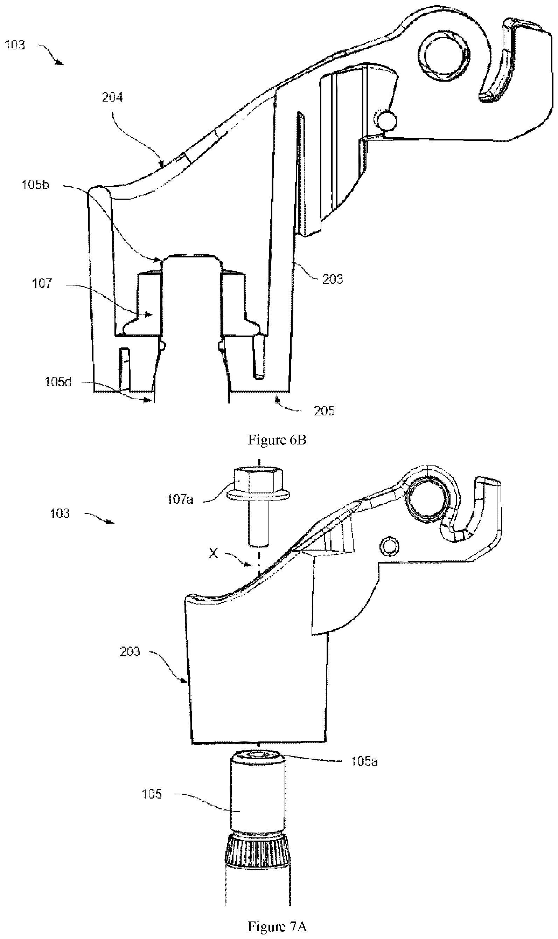

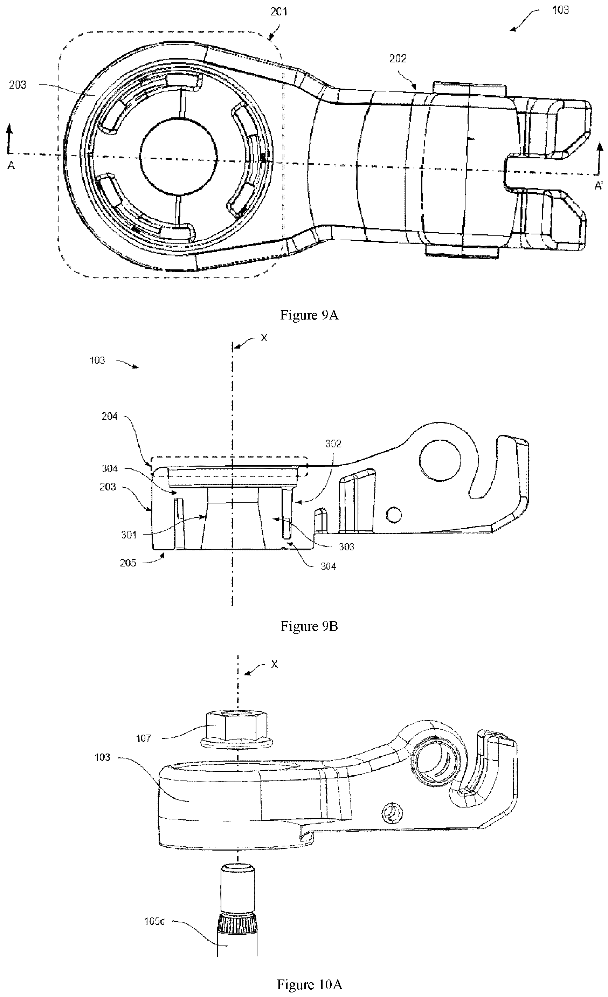

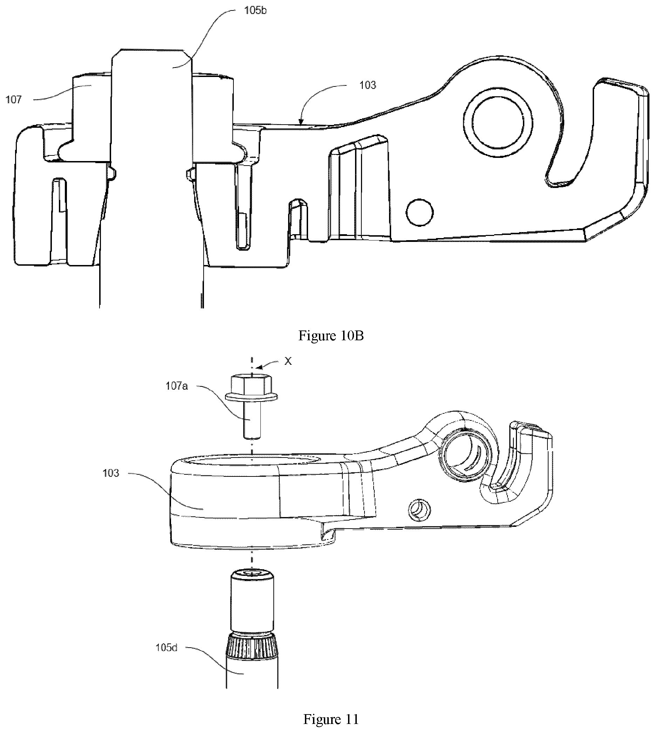

Figures 6A and 10A illustrate the arm head 103 and the securing means 107. In another embodiment, at least a portion of the pivot shaft 105 may be received in the through hole 301 of the arm head 103. Preferably, the arm head 103 may receive at least a portion of the pivot shaft 105 near to the top portion 105b. At least the portion of the pivot shaft 105 near to the top portion 105b may have an external threading on the outer surface. The securing means 107 may have a through hole provided with an internal tapping/threads complimenting the threads provided on the pivot shaft 105. It is to be noted that in the Figure 6B and 10B, it is clearly visible that a securing means 107 is a nut that may be threadedly connected to at least a portion of the pivot shaft 105 near to the top portion 105b.

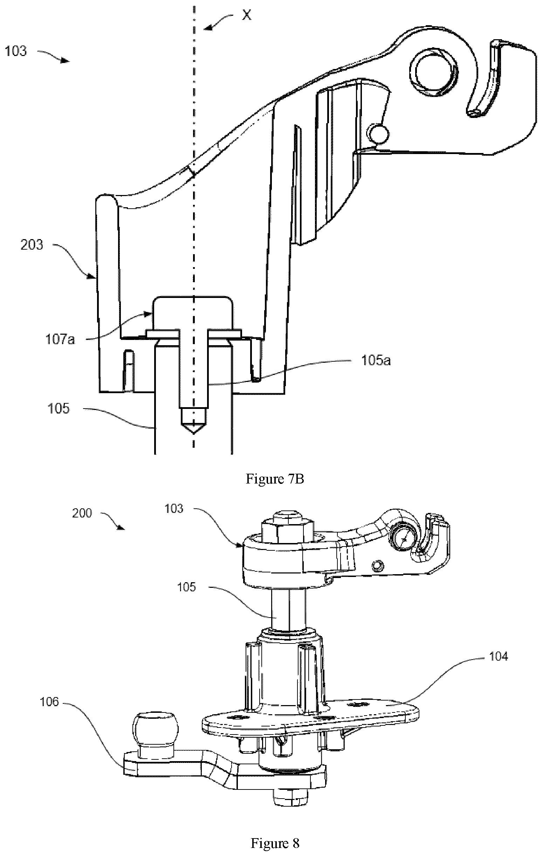

Figures 7A and 11, illustrate exploded views of a second embodiment of the invention. In the second embodiment, at least a portion of the pivot shaft 105 may be received in the hole 301 of the arm head 103. At least a portion of the pivot shaft 105 near the top portion 105b may have a blind hole 105a to securely receive at least a portion of a screw 107a. The blind hole 105a may have internal threading complementing the threading provided on the screw 107a.

Figure 8 illustrates the connection assembly 200 of according to the second embodiment of the present invention. The connection assembly 200 may include the arm head 103 secured to the pivot shaft 105. The pivot shaft 105 may be rotatably mounted in the pivot housing 104. The drive lever 106 may be fixed to the bottom portion 105c of the pivot shaft 105. Figures 9A and 9B illustrate arm head 103 according to the second embodiment. It is to be noted that the connection assembly 200 of this embodiment may be similar to the connection assembly 200 of the previous embodiment and possible variants, except in the configuration of the arm head 103. The arm head 103 may include a sidewall 203 disposed around the central hub 303. The sidewall 203 may include the upper end 204 and the lower end 205. Unlike the arm head 103 of previous embodiments, the upper end 204 of this arm head 103 may be located at the level of the upper surface, or proximate to the upper surface, of the central hub 303.

In an event of a vehicle collision, the impact force generated due to the collision between a pedestrian and the arm head 103, may be transferred along the pivot axis X shown by an arrow in Figure 5B. The upper end 204 of the arm head 103 absorbs the impact energy generated due to the collision and transfers the same to the central hub 303 through the at least one connection member 304 via sidewall 203. The central hub 303 receives at a least a portion of the pivot shaft 105 that provides support to central hub 303, restricting movement of central hub 303 with respect to the pivot shaft 105. The movement of the central hub 303 along the pivot axis X may be limited due to changing cross section of the pivot shaft 105.

Further, at the time of the impact sidewall 203 may move in the direction of the impact force shown with an arrow, relative to the central hub 303. Such impact force beyond a predefined amount may first induce a deformation and further, lead to a breaking of the connection members 304. In this way, the energy of the impact is safely dissipated, rather than transferred to the pedestrian where it may cause serious injury.

Here, it is to be noted that clean disengagement between the sidewall 203 and the central hub 303, is a result of the angular offset i.e. θ between the at least one connection member 304 arranged in the first plane and another connection member 304 arranged in the second plane. This results in collapse of the arm head 103, more particularly, collapse of the sidewall 203 of the arm head 103. Further, the amount of the impact energy absorbed is in proportion with the distance between upper end 204 and lower end 205 of the arm head 103.

The invention shall not, however, be limited to the means and configurations described and illustrated herein, and should be considered as extending to any equivalent means or configuration described and illustrated herein, and to any technical combination operating such means.

### LIST OF REFERENCE SIGNS

| | |
|---|---|
| 10 | Wiper system |
| 20 | Wiper motor |
| 30 | Linkages |
| 100 | Wiper assembly |
| 101 | Wiper Arm |
| 101a | First end of wiper arm |
| 101b | Second end of wiper arm |
| 102 | Wiper Blade |
| 103 | Arm Head |
| 103a | Arm Head Assembly |
| 104 | Pivot Assembly |
| 104a | Through hole |
| 105 | Pivot Shaft |
| 105a | Blind hole |
| 105b | Top portion of the pivot shaft |
| 105c | Bottom portion of the pivot shaft |
| 105d | Main body of the pivot shaft |
| 105e | Knurled portion |
| 106 | Drive lever |
| 107 | Securing means |
| 107a | Screw |
| 200 | Connection Assembly |
| 201 | First end portion |
| 202 | Second end portion |
| 203 | Sidewall |
| 204 | Upper end |
| 205 | Lower end |
| 206a | Upper surface |
| 206b | Lower surface |
| 301 | Hole |
| 302 | Recess |
| 303 | Central Hub |
| 304 | Connection member |
| 304a | Connection members of the plane P1 |
| 304b | Connection members of the plane P2 |
| 304c | Connection members of the plane P3 |
| P1 | First plane |
| P2 | Second Plane |
| P3 | Third Plane |
| R1 | First Radial Plane |
| R2 | Second Radial Plane |
| A | First Radial Surface of the connection member |
| B | Second Radial Surface of the connection member |

## Claims

1. An arm head (103) for connecting a wiper arm (101) to a pivot shaft (105) of a pivot assembly (104), the arm head (103) comprising:
a first end portion (201) configured to be secured to the pivot shaft (105) and a second end portion (202) configured to be attached to the wiper arm (101),
wherein the first end portion (201) includes a central hub portion (303) having a hole (301) with a central axis (X), said hole (301) configured to receive at least a portion of the pivot shaft (105), and
an arm head sidewall (203) disposed around the central hub portion (303),
wherein at least one connection member (304, 304a, 304b) is formed between the central hub portion (303) and the arm head sidewall (203), and
wherein the at least one connection member (304) is configured to break under an impact force on the arm head (103) exceeding a predefined force.

2. The arm head (103) according to claim 1, wherein a plurality of the connection members (304) are formed between the central hub portion (303) and the arm head sidewall (203).

3. The arm head (103) according to claim 2, wherein at least two connection members (304) are arranged in different planes, the said planes being substantially orthogonal to the central axis (X) and spaced apart along the central axis (X) of the hole (301).

4. The arm head (103) according to claim 3, wherein at least one of the planes comprises three connection members (304) uniformly distributed around the circumference of the central hub portion (303).

5. The arm head (103) according to claim 3, wherein at least one connection member (304) is arranged in a respective one of the said planes with an angular offset about the central axis (X) with respect to at least one connection member (304) arranged in an another, respective plane.

6. The arm head (103) according to claim 5, wherein the angular offset is at least 60 degrees.

7. The arm head (103) according to any of the preceding claims, wherein at least one of the connection members (304) has a generally circular, rectangular, oval, or square cross section.

8. The arm head (103) according to any of the preceding claims, wherein at least one of the connection members (304) extends in a corresponding plane about the central axis (X) between 2 degrees to 360 degrees.

9. The arm head (103) according to any of the preceding claims, wherein the arm head sidewall (203) includes a top end (304) axially offset with respect to the central hub portion (303) along the central axis (X).

10. A connection assembly (200) for a wiper system, the connection assembly (200) comprising:
the arm head (103) according to any of the preceding claims; and
a pivot assembly (104) including a pivot shaft (105) rotatably supported in a pivot housing (104),
wherein at least a portion of the pivot shaft (105) is received in the hole (301) of the central hub portion (303), and secured to the arm head (103) by a securing means (107, 107a).

11. The connection assembly (200) according to claim 10, wherein the securing means includes a nut (106) threadedly engaged with a top portion (401) of the pivot shaft (105).

12. The connection assembly (200) according to claim 10, wherein the securing means includes a screw (107a) threadedly engaged with a corresponding blind hole (105a) provided in top portion (401) of the pivot shaft (105).

13. A wiper assembly (100) for a wiper system (10), the wiper assembly (100) comprising:
a wiper blade (102) attached to an first end (101a) of a wiper arm (101); and
the connection assembly (200) according to any of the claims 10 to claim 12,
wherein the second end portion (202) of the arm head (103) is secured to a second end (101b) of the wiper arm (101).

14. A wiper system (10) for a motor vehicle, the wiper system comprising:
at least one wiper assembly (100) according to claim 13; and
at least one wiper motor (20) configured to rotate the pivot shaft (105) of the connection assembly (200) through linkages (30), to operate the at least one wiper assembly (100).
